# EUROPEAN PATENT APPLICATION

(11) **EP 1 486 899 A1**
(43) Date of publication of application: **15.12.2004**
(21) Application number: 04013658.2
(22) Date of filing: 09.06.2004
(51) Int. Cl.: G06F 17/60

(54) **Parts catalog creating system and program therefor**

(30) Priority: 12.06.2003 JP 2003167407
(71) Applicant: Kabushiki Kaisha Toyota Jidoshokki, Kariya-shi, Aichi-ken (JP)
(72) Inventor: Mitsuoka, Minoru, Kariya-shi, Aichi-ken (JP); Nunokawa, Kenichiro, Kariya-shi, Aichi-ken (JP)
(74) Representative: HOFFMANN - EITLE

(57) **Abstract**

In a parts catalog creating system, a part image storage stores part image data for displaying a part image, which contains illustration data for displaying illustration which describes plural constituent parts of a portion or a whole of a machine and identification code data for displaying identification code assigned to each of the plural parts. A parts list storage stores a parts list where related information in relation to the plural parts by setting the identification code assigned to each of the plural parts as a key. A generating means generates link information which links a display area of each identification code when the part image is displayed on a display device and the related information in the parts list for each identification code based upon the identification code data and the parts list. The output means outputs the part image data, the parts list and the link information.

## Description

### BACKGROUND OF THE INVENTION

The present invention relates to an electronic parts catalog creating system and a program therefor.

A parts catalog has conventionally been created by systematically listing each part of a machine and the like, and such parts catalog has been distributed or sold to users by manufacturer of the machine and the like. Then, the users referred to the parts catalog thereby to order parts for replacing trouble and consumed parts. It is noted that the conventional parts catalog has generally been printed on papers.

Recently, with paperless movement for various documents, electronic parts catalog has been increasing, and various forms of electronic catalogs have been provided or proposed.

For example, one system is disclosed in FIGS. 1 and 9 to 12 and columns [0029] to [0045] of Unexamined Japanese Patent Publication No. 2003-67608, which displays a parts catalog on the terminal of a user through the internet, the parts catalog containing the image of each part. Then, the user may order desired parts through the internet by utilizing the displayed parts catalog.

Also, one technique is disclosed in FIGS. 1 to 3 and columns 0014 to 0027 of Unexamined Japanese Patent Publication No. 8-147486, which accelerates generation of electronic catalogs such that a template for generating the electronic catalogs is previously prepared and image data, price information, model number and the like are allocated on the corresponding portion of the template. It is noted that the above Publication has introduced three techniques including a technique for processing mass information as disclosed in FIGS. 1 and 9 to 12 and pages 3 to 4 of Unexamined Japanese Patent Publication No. 62-55767, a technique for associating image data with text data as disclosed in FIG. 1 and pages 4 to 6 of Unexamined Japanese Patent Publication No. 2-18669, and a technique for editing catalogs for each user as disclosed in FIGS. 1 and 2, and columns [0018] to [0028] of Unexamined Japanese Patent Publication No. 4-247567.

Furthermore, a technique is disclosed in FIG. 1 and columns [0025] to [0031] of Unexamined Japanese Patent Publication No. 9-204454, which prepares an electronic catalog containing data embedded on parts such as image data of each part and shape, dimension, load condition and color of each part and, when necessary, accomplishes to read out the data embedded on the parts.

Furthermore, a technique is disclosed in FIG. 1 and columns [0016] to [0027] of Unexamined Japanese Patent Publication No. 11-85836, which helps generate easily an electronic catalog where selection criterion of parts is embedded.

A parts catalog containing image data of each part generally provides parts list showing such model number, price and the like of each part in addition to the image data. That is, such parts catalog generally provides separately image data of each part and a parts list, and the image data does not contain model number of each part and the like.

Therefore, a user at first refers to image data of the parts catalog to specify the desired parts when ordering a part whose model number is not known by the user. Subsequently, the parts list is referred to depending upon identification code (number or code and the like) assigned to the part on its image data thereby to check out the model number of the specified parts by referring to the image data, and then to order the part by indicating the model number to the manufacturer of the parts.

Thus, the conventional electronic parts catalog insufficiently links the image data with the parts list, so that it has not been convenient for the users. On the other hand, if link information is generated for linking the image of each part in the image data with each record on the parts list, convenience of the parts catalog will be improved but it requires a large amount of labor to generate such link information. Therefore, there is a need for improving convenience of an electronic parts catalog and also for easily generating such parts catalog.

### SUMMARY OF THE INVENTION

In accordance with the present invention, a parts catalog creating system has a part image storage, a parts list storage, a generating means and an output means. The part image storage stores part image data for displaying a part image. The part image contains illustration data for displaying illustration which describes plural constituent parts of a portion or a whole of a machine and identification code data for displaying identification code assigned to each of the plural parts. The parts list storage stores a parts list where related information in relation to the plural parts by setting the identification code assigned to each of the plural parts as a key. The generating means generates link information which links a display area of each identification code when the part image is displayed on a display device and the related information in the parts list for each identification code based upon the identification code data and the parts list. The output means outputs the part image data, the parts list and the link information.

Furthermore, in accordance with the present invention, a process for executing creation of parts catalog by computer includes loading identification code data from a part image storage which stores part image data for displaying a part image containing illustration, data for displaying illustration describing plural constituent parts of a portion or a whole of a machine, loading a parts list from a parts list storage which stores the parts list where related information which is linked with the plural parts by setting an identification code assigned to each of the plural parts as a key, generating link information which links a display area of each identification code when the part image is displayed on the display device with the related information in the parts list for each identification code based upon the identification code data and the parts list; and outputting the part image data, the parts list and the link information.

Other aspects and advantages of the invention will become apparent from the following description, taken in conjunction with the accompanying drawings, illustrating by way of example the principles of the invention.

### BRIEF DESCRIPTION OF THE DRAWINGS

The features of the present invention that are believed to be novel are set forth with particularity in the appended claims. The invention together with objects and advantages thereof, may best be understood by reference to the following description of the presently preferred embodiments together with the accompanying drawings in which:
FIG. 1 is a block diagram illustrating a basic structure of parts catalog creating system according to a preferred embodiment of the present invention;
FIG. 2 is an example of part image according to the preferred embodiment of the present invention;
FIGS. 3A through 3C are portions of the part image which are layered to complete the part image according to the preferred embodiment of the present invention;
FIG. 4 is an example of a parts list according to the preferred embodiment of the present invention;
FIG. 5 is an example of a parts catalog displayed on a display device according to the preferred embodiment of the present invention;
FIG. 6 is a first view for explaining link between the part image and the parts list according to the preferred embodiment of the present invention;
FIG. 7 is a second view for explaining the link between the part image and the parts list according to the preferred embodiment of the present invention;
FIG. 8 is a flow chart illustrating a process for generating link information according to the preferred embodiment of the present invention;
FIG. 9A is a schematic view illustrating identification code data according to the preferred embodiment of the present invention;
FIG. 9B is a schematic view illustrating generated link information according to the preferred embodiment of the present invention;
FIG. 10 is a view for explaining search function according to the preferred embodiment of the present invention;
FIG. 11 is a view for explaining function for saving order data according to the preferred embodiment of the present invention; and
FIG. 12 is a block diagram of a computer for executing a program in relation to the present invention.

### DETAILED DESCRIPTION OF THE PREFERRED EMBODIMENTS

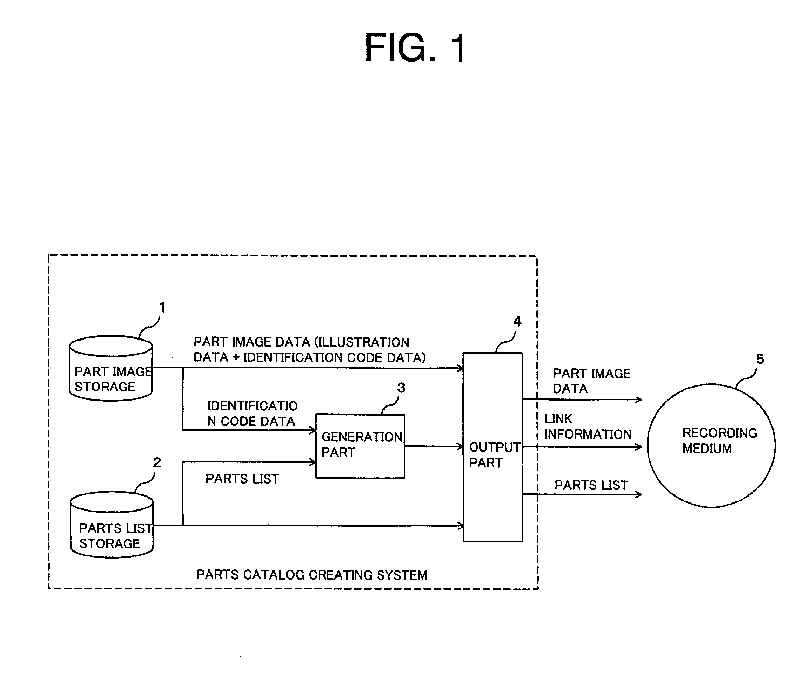

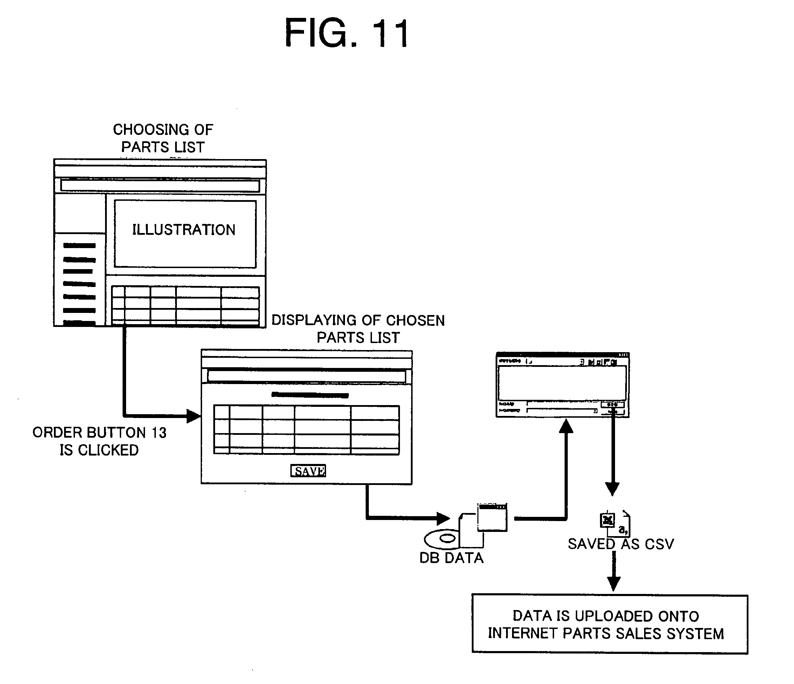

A preferred embodiment of the present invention will now be described with reference to FIGS. 1 through 12.

FIG. 1 is a block diagram illustrating a basic structure of parts catalog creating system according to the preferred embodiment of the present invention. It is noted that the parts catalog creating system according to the present invention displays a constituent part of a portion or a whole of machine. Also, the machine is for example a loom or a textile machine including a fine spinning machine and the like but it is not limited to them.

As shown in FIG. 1, a part image storage or a part image storing means 1 has stored therein part image data (hereinafter, which may simply be called part image) describing a part image for display. The part image data contain illustration data for displaying illustration drawing plural constituent parts of a portion or a whole of machine and identification code data for displaying identification number or identification code assigned to each of the plural parts. It is noted that the identification code data for drawing identification number is described so as to be separable from the illustration data for displaying illustration.

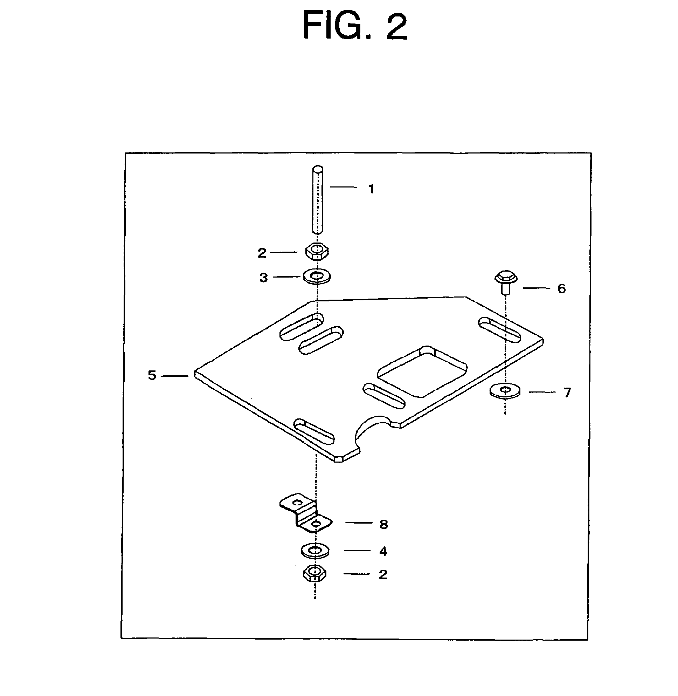

FIG. 2 is an example of the part image described based upon the part image data stored in the part image storage 1. Then, the exploded perspective view of each portion is drawn in the part image when a target machine for parts catalog is separated into several portions. That is, a single or plural illustrations are drawn. In an example shown in FIG. 2, the illustrations of nine parts are drawn.

In the part image, each part has an identification number or an identification code assigned thereto, respectively. It is noted that the identification number is a number for identifying classification of parts. Therefore, when a plurality of identical parts is described in the part image, those part images have the same identification number assigned thereto. For example, in the example shown in FIG. 2, two identical hexagonal nuts are drawn, and each have the same identification number "2" assigned thereto, respectively. It is noted that numerical identification numbers (1, 2, 3, ...) are used as identification code in this example but it is not limited. For example, alphabetical or character identification codes such as (a, b, c, ...) may be used.

The part image is, for example, generated by designer and the like of the target machine of the parts catalog. It is noted that this part image is generated by image data format which enables to separately describe illustration of the part and the identification number thereof. It is not specifically limited but may, for example, be generated by SVG (Scalable Vector Graphics). It is noted that SVG is one of vector-type image data format for expressing images by aggregation of lines and curved lines, which format is standardized in WWW consortium (W3C), that is, a standard-setting organization of web technology.

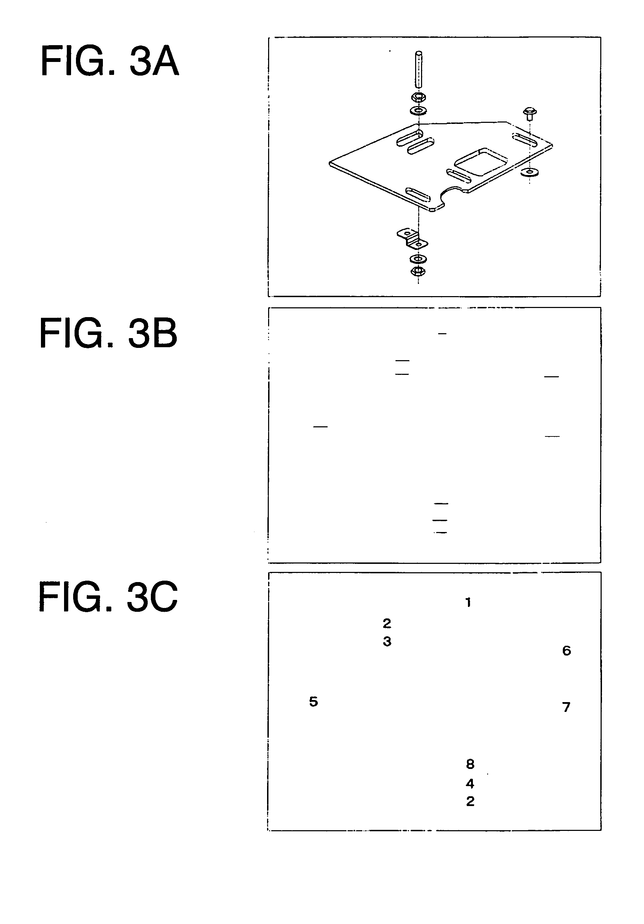

FIGS. 3A through 3C show part images generated with SVG for each layer. FIG. 3A shows image of the layer where illustration of the part in the part image indicated in FIG. 2 is drawn. FIG. 3B shows image of the layer where leader lines are drawn. FIG. 3C shows image of the layer where identification numbers are drawn. That is, image is drawn by identification code data. It is noted that data for drawing image of each layer is generated separably from each other.

Then, data for drawing layer image having identification number drawn thereon as shown in FIG. 3C are described with the following information. That is, each identification number on the part image is, for example, described at least by information generated for each identification number, such as "area information for determining position and size of a display area", "character code information for determining character to be displayed", "font information for determining size and the like of character to be displayed" and "character color information for determining color of character to be displayed".

Referring back to FIG. 1, a parts list storage or a parts list storing means 2 stores therein a parts list (or parts list data for displaying a parts list on a display device) in relation to parts drawn on the above part image. Then, related information in relation to the parts drawn on the part image with each identification number as a key is described on the parts list.

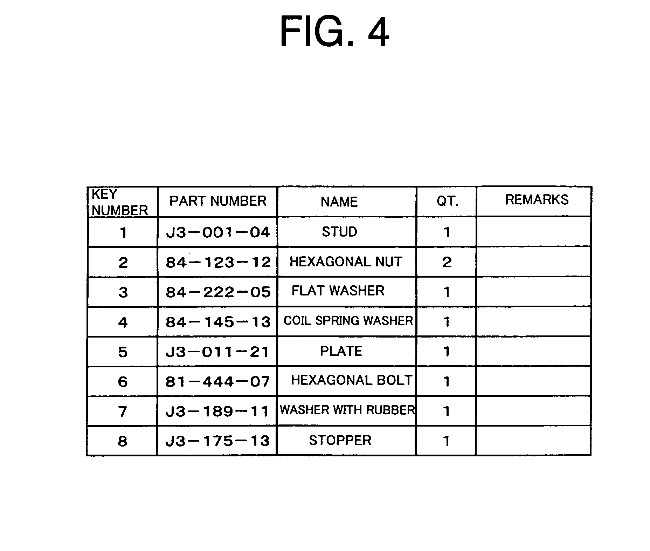

FIG. 4 is an example of the parts list stored in the parts list storage 2. The parts list corresponding to the part image shown in FIG. 2 is drawn.

In the parts list shown in FIG. 4, "key number" directly employs identification number assigned to each part in the part image. "Related information" in relation to each part contains "part number", "name", "quantity", "remarks" and the like in this example. "Part number" is used when ordering the part to manufacturer thereof (for example, model number determined by manufacturer of the part). It is noted that it is not limited but a part image and a parts list corresponding thereto are desirably generated simultaneously or in parallel by the same designer to avoid discrepancy between identification number in the part image and key number in the parts list.

A generation part or a generating means 3 loads identification number data of the part image data stored in the part image storage 1 and a parts list stored in the parts list storage 2, and then generates link information. It will be described later but the link information is used for linking display area of each identification code of the part image when the part image is displayed on the display device with the related information in the parts list for each identification code.

An output part or an output means 4 outputs the part image data stored in the part image storage 1, the parts list stored in the parts list storage 2, and the link information generated at the generation part 3 for forming an electronic parts catalog. Then, the parts catalog creating system may write the part image data, the parts list and the link information on a recording medium 5.

It is noted that the electronic parts catalog is provided for users through a portable storage medium such as CD-ROM. In this case, the parts catalog creating system writes the part image data, the parts list and the link information on the portable recording medium as the recording medium 5. A software program required for enabling a user to browse the parts catalog may be written at the same time. Also, this parts catalog may be provided for users through a network such as the internet. In this case, the parts catalog creating system writes the part image data, the parts list and the link information on the storage area of a server computer which is accessible by the user of the parts catalog.

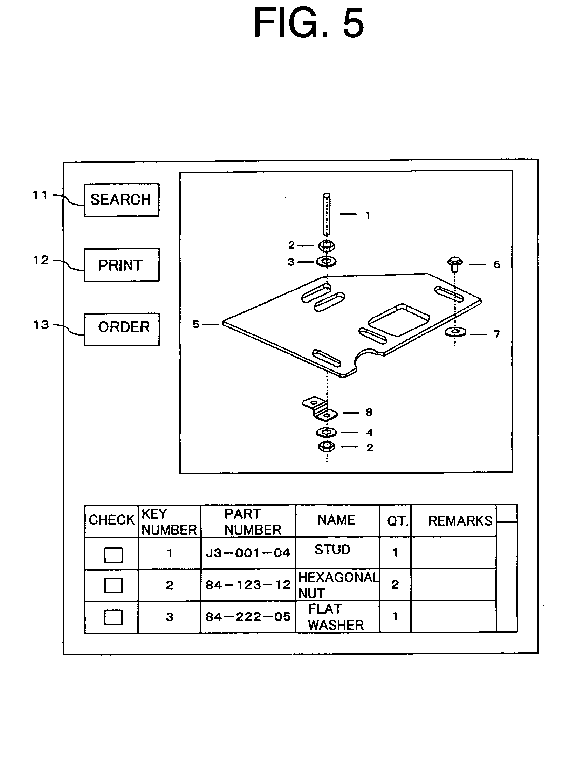

FIG. 5 is an example of the parts catalog displayed on the display device of a user computer. It is noted that this parts catalog is, for example, displayed by a general personal computer on its display device. Then, the part image and the parts list corresponding to the part image are displayed on the display device. It is noted that only a part of the parts described in the corresponding part image is displayed as the parts list when the parts list has a large number of parts.

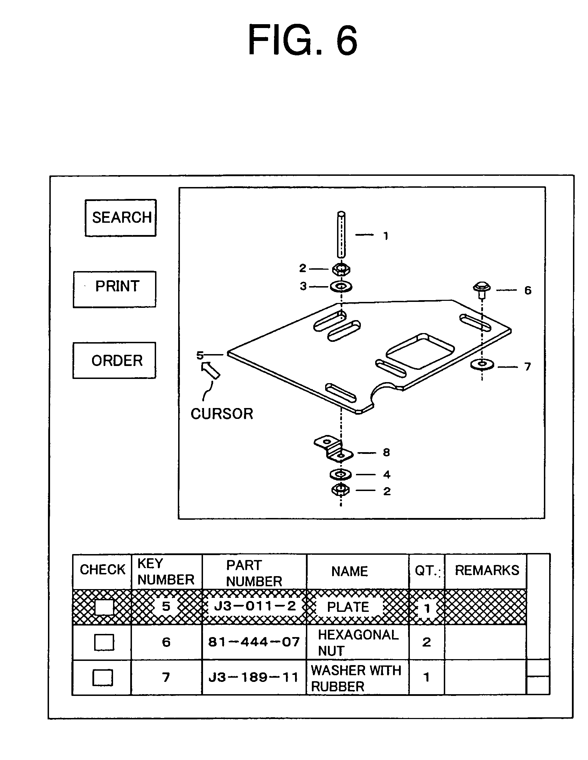

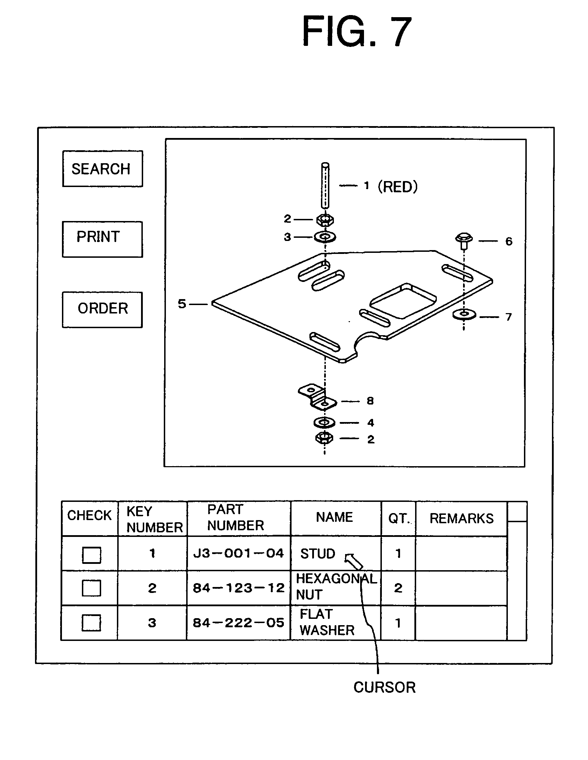

FIGS. 6 and 7 are views for explaining link between the part image and the parts list. It is noted that the link between the part image and the parts list is defined by the link information generated at the generation part 3.

Users can point out an optional point (or position) on the display of the display device by operating an input device (hereinafter, a mouse). For example as shown in FIG. 6, when an identification number ("5" in the preferred embodiment) in the part image is clicked, the record specified by the "key number" which corresponds to the clicked identification number is allocated on the highest line of the parts list, and the record is highlighted. It is noted that the clear identification means that the relevant record is, for example, highlighted with a different color from other record.

As shown in FIG. 7, when one record ("key number 1" in the preferred embodiment) in the parts list is clicked, the identification number corresponding to the key number of the clicked record is highlighted in the corresponding part image. It is noted that the clear identification means that the relevant identification number is, for example, displayed with different color or font from other identification number, or is blinking. In the example shown in FIG. 7, "1" is displayed with red in the part image, while the others are displayed with black.

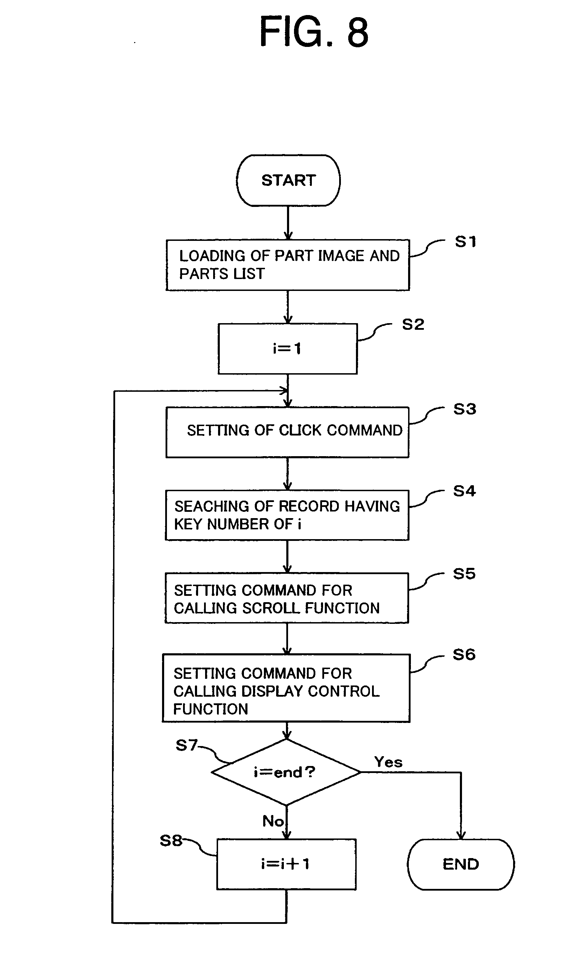

FIG. 8 is a flow chart showing a process for generating the link information. It is noted that this process is executed at the generation part 3 shown in FIG. 1.

Part image data and a parts list which correspond to each other are loaded at step S1. It is noted that data of all layers are not loaded for the part image data but only identification code data described for displaying identification number are loaded. For example, in the examples shown in FIGS. 3A through 3C, only data for displaying image shown in FIG. 3C is loaded. It is noted that identification code data for displaying layer image which shows identification number contains information defined for each identification number as described above, the information containing "area information for determining position and size of display area", "character code information for determining character to be displayed", "font information for determining size and the like of character to be displayed" and "character color information for determining character color to be displayed".

Steps S3 to S6 in this order to each identification number drawn in the image data which is loaded at the step S1 are executed at steps S2, S7 and S8.

A command for initiating a predetermined action is set at the step S3 in response to clicking of the display area specified by "area information" for identification number i in the identification code data. Then, this command is, for example, executed by using "onClick" which is one of event handlers of JavaScript. Also, another kind of event handler may be used. It is noted that "Java" is a registered trademark.

A record of "key number = i" in the parts list is searched at the step S4. Subsequently, a command for calling a scroll function is set at the step S5 by being related to the command (for example, event handler) set at step S3. It is noted that the scroll function means a function for scrolling displayed contents in the specified window on the display of the display device. Then, a record of "key number = i" in the parts list is specified as parameter for the function, and a command is set for scrolling the record to be displayed on the highest line. It is noted that the scroll function is achieved, for example, by using browser's function.

A command for calling a display control function is set at the step S6 by being related to the command (for example, event handler) set at the step S3. The display control function means a function for indicating display color of a specified character, a record, an area and the like. Then, a record of "key number = i" in the parts list is specified as parameter for the function, and the specified display color is indicated. It is noted that the display control function may employ a general program module.

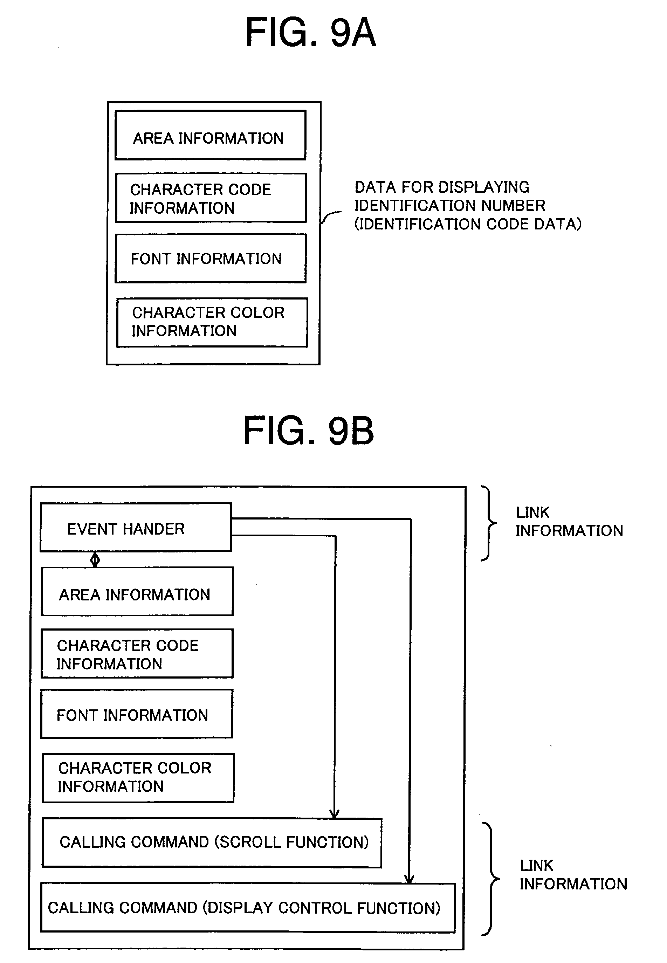

FIG. 9A shows a schematic view of the identification code data, and FIG. 9B shows a schematic view of the generated link information. Then, the link information generated through the flow chart shown in FIG. 8 is schematically described.

The generation part 3 loads identification code data describing therein image of the layer where identification number is drawn. It is noted that data for displaying a certain identification number is schematically described in an example shown in FIG. 9A. The generation part 3 generates "event handler" and embeds it in a predetermined position in the identification number data as shown in FIG. 9B. Then, the "event handler" is embedded such that "area information" is set as parameter for specifying a trigger event. Commands for calling the scroll function and the display control function are also embedded in the identification number data so as to be executed by the "event handler". It is noted that an event handler, a calling command and the like correspond to the link information. Also, these processes are executed for each identification number.

Thus, the parts catalog creating system of the preferred embodiment is premised on that illustration data for describing illustration in the part image and identification code data for describing identification number are separable. Then, identification code data are used when generating the link information. It is noted that the identification data which are vector data having a small amount of information contain "area information", "character code information", "font information", "character color information" and the like. Accordingly, when a process in the flow chart of FIG. 8 is executed, the link information is generated for a short time. Also, a program corresponding to the flow chart of FIG. 8 is easily created.

In FIGS. 8 and 9, the link information for the process shown in FIG. 7 is also basically generated by the same procedure as explained for the link information for the process shown in FIG. 6, that is, a process for highlighting the record corresponding to the parts list on the highest line as identification number is clicked on the part image. It is noted that in this case an event handler needs be set for calling a predetermined function in response to the clicking of the area for displaying a record in the parts list. Additionally, the function to be called contains a command for varying "font information" and "character color information" in the identification code data for displaying the identification number.

Though the examples of FIGS. 2 through 9 explain the link between a certain part image and its corresponding parts list by focusing thereon, an actual parts catalog contains thereon a part image for each portion of a target machine and its corresponding parts list. Then, the part image and its corresponding parts list may, for example, be generated for each portion on a certain layer where the target machine is hierarchically divided. Additionally, a part image and its corresponding parts list may be generated on a further lower layer for portions containing particularly complicated components. Anyway, the parts catalog contains plural part images and their corresponding plural parts lists, and each pair of the part image and the parts list corresponding to each other has the link information which is generated and assigned thereto.

Furthermore, the target machine of the parts catalog may be customized for each user. That is, a different part for each user may possibly be used. In this case, naturally, the parts catalog sold or distributed for each user is desirably customized for each user. Accordingly, when the machine sold for a certain user does not comply with a standard specification but uses a special parts, part image data complying with the special specification and its corresponding parts list are generated and stored in the part image storage 1 and the parts list storage 2 with information for identifying its user as a key. When the parts catalog sold or distributed for its user is created, the part image data is loaded from the part image storage 1 with information for identifying its user as a key, and its corresponding parts list is also loaded from the parts list storage 2, and then the link information based upon the above data is generated and output.

Even if the machine sold for a certain user contains a special part, and when the shape of the special part is substantially not different from a standard part, the part image data for the standard part may be diverted for the special part as it is. A slight difference of the shape does not make substantial distinction for the part image. By so sharing the part image data, work for creating part images is reduced, and the size of the part image storage 1 is made smaller. Even in this case, the content of the parts list needs be created individually.

Another function of the parts catalog created by the parts catalog creating system according to the preferred embodiment will now be described. It is noted that various functions provided by the parts catalog are, for example, called by clicking a button displayed on the display device.

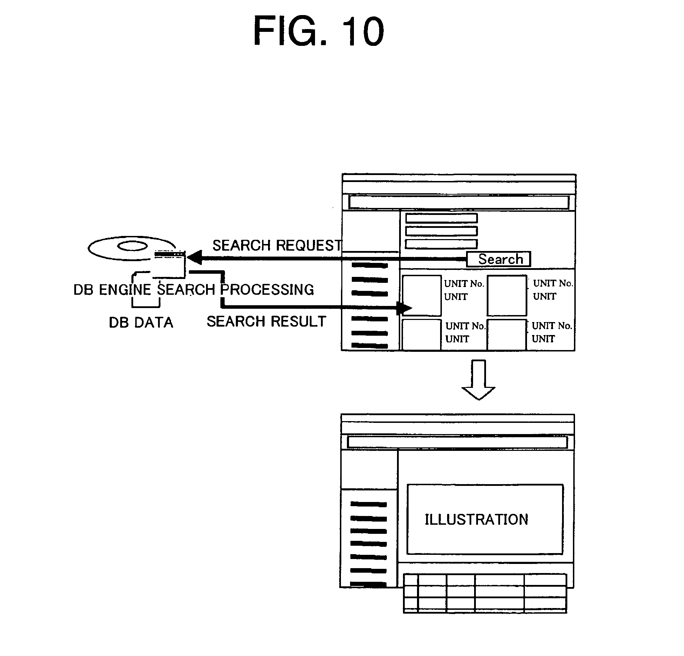

In FIG. 5, as a search button 11 is clicked, a screen for inputting a search keyword is called up, where a keyword for inputting includes "name", "part number" and the like. Then, as a user executes searching by inputting a certain keyword, a parts list containing a part corresponding to the keyword and its corresponding part image are displayed. In this case, when a plurality of choices is hit to a certain search keyword, a plurality of hit part images is displayed as thumbnails as shown in FIG. 10. As the user chooses a certain image in the thumbnails, the chosen image is zoomed, and its corresponding parts list is displayed.

As a print button 12 is clicked, a part image and/or a parts list displayed thereon are printed out.

An order button 13 is used for creating order data or quotation data for a desired part. That is, when a user finds a part for buying or for quotation inquiry, the user chooses the parts by clicking a check box of the record in the parts list. Then, the user may choose one or plural parts from the displayed parts list. Also, by changing the displayed parts list sequentially, the user may choose plural parts individually from plural parts lists.

Subsequently, as the order button 13 is clicked, HTML data for displaying one or plural parts chosen in the previous process is generated and displayed as they listed. As a save button is then clicked, information for describing the chosen parts is saved as CSV data.

The saved CSV data may, for example, be used as order sheet or quotation inquiry by uploading them to a server of parts supplier. It is noted that a system for ordering a part and the like by using the internet is, for example, disclosed in the Unexamined Japanese Patent Publication No. 2003-67608. Additionally, the saved CSV data may be used for creating a document for obtaining approval of management level employees in advance of actually ordering the part.

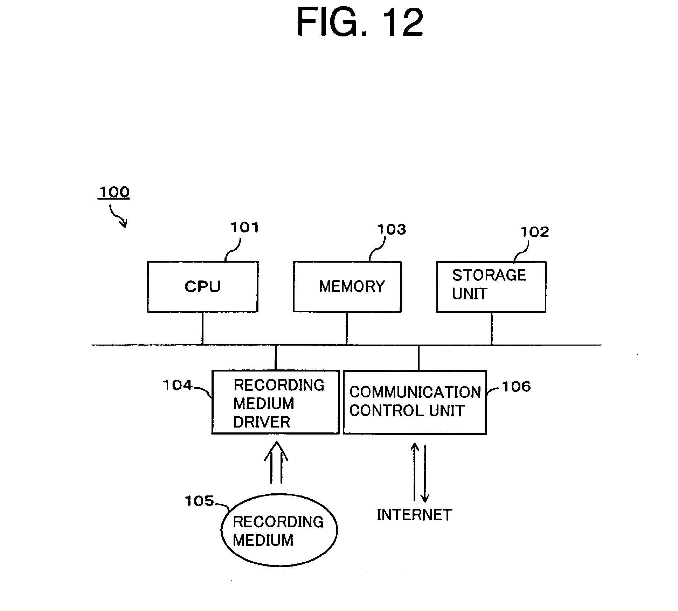

The above described function according to the preferred embodiment is accomplished by executing a program which describes procedure with reference to FIGS. 1 through 11 by computer. A block diagram of a computer 100 for executing the program is shown in FIG. 12.

A CPU 101 executes a program describing the procedure, which is explained by referring to FIGS. 1 through 11, by loading the program from a storage unit 102 to a memory 103. The storage unit 102 is a mass-storage device, storing the above program. Also, the part image storage 1, the parts list storage 2 and the recording medium 5 shown in FIG. 1 may be accomplished by this storage unit 102. It is noted that the storage unit 102 may be one or plural external storages that are connected to the computer 100. The memory 103 is, for example, a semiconductor memory used as work area of the CPU 101.

A recording medium driver 104 accesses a portable recording medium 105 in accordance with a command of the CPU 101. The portable recording medium 105, for example, includes a semiconductor device (a PC card and the like), a medium to which information is input and output by magnetic action (flexible disk, magnetic tape and the like), and a medium to which information is input and output by optical action (optical disk and the like). It is noted that the recording medium 5 shown in FIG. 1 may be accomplished by this portable recording medium 105. A communication control unit 106 sends and receives data through network in accordance with a command of the CPU 101.

The parts catalog creating program according to the present invention is optionally provided by one of the following methods.
(1) The parts catalog creating program is provided by installing the program into a computer. In this case, the program is, for example, preinstalled into the computer 100 before shipping.
(2) The parts catalog creating program is provided by storing the program in a portable recording medium. In this case, the program stored in the portable recording medium 105 is basically installed into the storage unit 102 through the recording medium driver 104.
(3) The parts catalog creating program is provided by downloading the program from a program server on a network. In this case, the computer 100 basically obtains the corresponding program by downloading the program from the program server. It is noted that this embodiment includes a case that the program is executed on a server, and its result is provided through a network.

Therefore, the present examples and embodiments are to be considered as illustrative and not restrictive, and the invention is not to be limited to the details given herein but may be modified within the scope of the appended claims.

## Claims

1. A system for creating and displaying a parts catalog comprising:
a part image storage storing part image data for displaying a part image containing:
illustration data for displaying illustration which describes plural constituent parts of a portion or a whole of a machine; and
identification code data with area information for displaying identification code assigned to each of the plural parts at a position of a display device;
a parts list storage storing a parts list for supplying related information corresponding to the plural parts by setting the identification code assigned to each of the plural parts as a key;
a generating means adapted to generate link information which links a display area of each identification code specified by the area information when the part image is displayed on the display device with the related information in the parts list, for each identification code based upon the identification code data and the parts list; and
an output means for outputting the part image data, the parts list and the link information.

2. The system for creating and displaying a parts catalog according to claim 1, wherein the identification code data comprise vector data for specifying the position of the display area of each identification code, the generating means generating the link information by using the vector data.

3. The system for creating and displaying a parts catalog according to claim 1, wherein the link information generated by the generating means contains information for displaying related information which is linked with an identification code specified by a user using the parts image when the parts image is displayed on the display device.

4. The system for creating and displaying a parts catalog according to claim 3, wherein the link information generated by the generating means contains information for highlighting the related information which is linked with the identification code specified by the user.

5. The system for creating and displaying a parts catalog according to claim 1, wherein the link information generated by the generating means contains information for highlighting identification code which is linked with related information specified by a user in the parts list when the part image and the parts list are displayed on the display device.

6. A computer program product loadable to and executable by a computer, comprising software code portions for performing the steps of:
loading identification code data with area information from a part image storage which stores part image data for displaying a part image containing illustration data for displaying illustration describing plural constituent parts of a portion or a whole of a machine on a display device;
loading a parts list from a parts list storage which stores the parts list, in which related information linked with the plural parts is written by setting an identification code assigned to each of the plural parts as a key;
generating link information which links a display area of each identification code specified by the area information when the part image is displayed on the display device with the related information in the parts list, for each identification code based upon the identification code data and the parts list; and
outputting the part image data, the parts list and the link information.

7. The computer program product loadable to and executable by a computer according to claim 6, wherein the identification code data comprise vector data for specifying the position of the display area of the identification code, the link information being generated by using the vector data.

8. The computer program product loadable to and executable by a computer according to claim 6, wherein the link information contains information for displaying related information which is linked with the identification code specified by a user using the part image when the part image is displayed on the display device.

9. The computer program product loadable to and executable by a computer according to claim 8, wherein the link information contains information for highlighting related information which is linked with the identification code specified by the user.

10. The computer program product loadable to and executable by a computer according to claim 6, wherein the link information contains information for highlighting the identification code which is linked with related information specified from the parts list by a user when the part image and the parts list are displayed on the display device.

11. The computer program product loadable to and executable by a computer according to claim 6, wherein the program is used for creating a parts catalog.
